# EUROPEAN PATENT APPLICATION

(11) **EP 4 797 711 A1**
(43) Date of publication of application: **26.08.2026**
(21) Application number: 24883792.4
(22) Date of filing: 09.04.2024
(51) Int. Cl.: H04N 23/51, B60R 11/04

(54) **ONBOARD CAMERA AND MACHINING METHOD THEREFOR**

(30) Priority: 03.11.2023 CN 202311452115; 03.11.2023 CN 202322966779 U
(71) Applicant: Tung Thih Electron (Xiamen) Co., Ltd., Xiamen Fujian 361006 (CN)
(72) Inventor: DAI, Junping, Xiamen, Fujian 361006 (CN); YING, Song, Xiamen, Fujian 361006 (CN); LIAN, Chuanjia, Xiamen, Fujian 361006 (CN)
(74) Representative: Torggler & Hofmann Patentanwälte - Innsbruck
(86) International application number: PCT/CN2024/086743
(87) International publication number: WO 2025/091777

(57) **Abstract**

The present disclosure relates to a vehicle-mounted camera and a processing method thereof. The vehicle-mounted camera comprises a housing comprising a front housing (101) and a rear housing (102) fixedly connected together; a lens (7) connected to an end of the front housing (101) away from the rear housing (102); a PCB board (5) disposed inside the front housing (101); and a terminal connector (2) disposed on an end of the rear housing (102) away from the front housing (101), wherein the terminal connector (2) has one end connected to the PCB board (5), and has the other end extend out of the rear housing (102); and the terminal connector (2) includes a plug core (201) and a plug (202), with the plug (202) being integrally formed with the rear housing (102) by injection molding, and the plug core (201) being inserted into the plug (202).

## Description

### CROSS REFERENCE TO RELATED APPLICATIONS

The present disclosure is based on and claims the priority right of a Chinese application filed on November 3, 2023 with an application number of 202311452115.X, 202322966779.X, the disclosure of which is incorporated herein by reference in its entirety.

### TECHNICAL FIELD

The present disclosure relates to vehicle-mounted cameras and processing methods thereof.

### BACKGROUND ART

A vehicle-mounted camera is a device used to provide images required in vehicle travelling process. Its function of presenting video and audio in real time provides a more scientific basis for traffic accident handling and positioning. Under the development trend of autonomous driving, the application of vehicle-mounted cameras will be more extensive and in-depth. However, the existing vehicle-mounted camera has a large volume, which leads to high material costs and excessive space occupation in the vehicle body, accordingly affecting the arrangement and installation of components related to the vehicle body.

### CONTENT OF THE INVENTION

Embodiments of the present disclosure provide a vehicle-mounted camera and a processing method thereof, which can reduce the volume of the vehicle-mounted camera.

According to an aspect of the present disclosure, a vehicle-mounted camera is provided, including:
a housing including a front housing and a rear housing fixedly connected together;
a lens connected to an end of the front housing away from the rear housing;
a PCB board disposed inside the front housing; and
a terminal connector disposed on an end of the rear housing away from the front housing, wherein the terminal connector has one end connected to the PCB board, and has the other end extend out of the rear housing; and the terminal connector includes a plug core and a plug, with the plug being integrally formed with the rear housing by injection molding, and the plug core being inserted into the plug.

In some embodiments, the front housing and the rear housing are fixed by laser welding.

In some embodiments, an axis of the terminal connector is offset from a center of the rear housing.

In some embodiments, a distance between the axis of the terminal connector and the center of the rear housing is greater than 0 and less than or equal to 3.7 mm.

In some embodiments, the distance between the axis of the terminal connector and the center of the rear housing is greater than or equal to 2.7mm and less than or equal to 3.7mm.

In some embodiments, a protrusion is provided inside the front housing, and the PCB board is bonded to the protrusion.

In some embodiments, the PCB board is provided with an interface which is disposed within the front housing, and the plug core is connected with the PCB board through the interface.

In some embodiments, a center of the PCB board coincides with the center of the rear housing.

In some embodiments, the plug core is fixed to the rear housing by dispensing adhesive in a circumferential direction on an inner side of the rear housing.

In some embodiments, the vehicle-mounted camera further includes:
a connection post disposed on a side of the rear housing away from the front housing and configured to be fixedly connected with a mounting bracket or a vehicle body component, wherein the connection post is integrally formed with the rear housing by injection molding, and is disposed at intervals from the plug.

In some embodiments, the distance between the axis of the terminal connector and the center of the rear housing is equal to 2.7 mm.

In some embodiments, the connection post includes a screw post or a hot-melt post, in which the screw post is configured to be in threaded connection with the mounting bracket or the vehicle body component, and the hot-melt post is configured to be in hot-melt connection with the mounting bracket or the vehicle body component.

In some embodiments, the vehicle-mounted camera further includes:
a clasp disposed on a wall of the front housing or the rear housing and configured to be fixedly connected with the mounting bracket or the vehicle body component.

In some embodiments,
the lens and the front housing are bonded by adhesive, or the lens and the front housing are integrally formed.

In some embodiments, the distance between the axis of the terminal connector and the center of the rear housing is 2.7mm, and the vehicle-mounted camera has a length of 18mm, a width of 18mm and a height of 30.8mm.

In some embodiments, an outline of the rear housing is square, and an outline of the terminal connector is circular.

According to another aspect of the present disclosure, a processing method for the vehicle-mounted camera based on the above embodiments is proposed, including:
processing the rear housing provided with the terminal connector;
providing the front housing, and fixedly connecting the PCB board to an inside of the front housing;
fixedly connecting the lens to an end of the front housing away from the rear housing;
connecting an end of the terminal connector to the PCB board;
fixedly connecting the rear housing to the front housing.

In some embodiments, the rear housing includes a rear housing body portion, and the step of processing the rear housing provided with the terminal connector includes:
providing the plug core;
placing the plug core into an injection mold for injection molding, such that the rear housing body portion formed after injection molding wraps around the plug core, and the rear housing body portion includes the plug wrapped around the plug core;
fixing the plug core to the rear housing body portion by dispensing adhesive on the inner side of the rear housing.

In some embodiments, the rear housing includes a rear housing body portion, and the step of processing the rear housing provided with the terminal connector includes:
performing injection molding with an injection mold to form the rear housing body portion, wherein the rear housing body portion includes the plug;
inserting the plug core into the plug;
fixing the plug core to the rear housing body portion by dispensing adhesive on the inner side of the rear housing.

Based on the above technical solution, in the vehicle-mounted camera according to embodiments of the present disclosure, the plug and the rear housing are integrally formed by injection molding, which results in low cost, fewer parts, simplified structure, reduced assembling time and high assembling efficiency, and can save the structural space required for screw fastening, and reduce volume of the camera. The integrally formed structure is stable, thus capable of improving the accuracy and stability of the connection between the plug core and the PCB board, and prolonging the service life of the vehicle-mounted camera.

### BRIEF DESCRIPTION OF THE DRAWINGS

The accompanying drawings described herein are used to provide a further understanding of the present disclosure and thus constitute part of the present disclosure. The illustrative embodiments of the present disclosure and their descriptions are used to interpret the present disclosure and shall not constitute an improper limitation on the present disclosure. In the accompanying drawings:
FIG. 1 is a schematic flow chart of a processing method for a vehicle-mounted camera according to some embodiments of the present disclosure.
FIG. 2 is a structural schematic view of a rear housing of the vehicle-mounted camera according to some embodiments of the present disclosure.
FIG. 3 is a structural schematic view showing that a plug core and a plug of the vehicle-mounted camera are mounted according to some embodiments of the present disclosure.
FIG. 4 is a schematic view showing that the plug core and the rear housing of the vehicle-mounted camera are fixed by dispensing adhesive according to some embodiments of the present disclosure.
FIG. 5 is a schematic view showing installation of a PCB board and a front housing of the vehicle-mounted camera according to some embodiments of the present disclosure.
FIG. 6 is a schematic view showing that the PCB board and the front housing of the vehicle-mounted camera are fixed via bonding according to some embodiments of the present disclosure.
FIG. 7 is a structural schematic view showing that a terminal connector of the vehicle-mounted camera is eccentrically disposed on its rear housing according to some embodiments of the present disclosure.
FIG. 8 is an exploded schematic view showing installation of a lens and the front housing of the vehicle-mounted camera according to some embodiments of the present disclosure.
FIG. 9 is a structural schematic view showing that the lens and the front housing of the vehicle-mounted camera are mounted together according to some embodiments of the present disclosure.
FIG. 10 is a cross-sectional structural schematic view of the lens and the front housing of the vehicle-mounted camera according to some embodiments of the present disclosure.
FIG. 11 is a cross-sectional structural schematic view of the vehicle-mounted camera according to some embodiments of the present disclosure.
FIG. 12 is an external structural schematic view of the vehicle-mounted camera according to some embodiments of the present disclosure.
FIG. 13 is an internal structural schematic view of the vehicle-mounted camera according to some embodiments of the present disclosure.

### Explanation of the reference signs

1. housing; 101. front housing; 102. rear housing; 1021. rear housing body portion; 2. terminal connector; 201. plug core; 202. plug; 3. screw post; 4. support post; 5. PCB board; 6. interface; 7. lens; 8. end surface; 9. protrusion; 10. adhesive layer.

### EMBODIMENTS

The present disclosure is described in detail below. In the following paragraphs, different aspects of the embodiments are defined in further detail. Each aspect so defined may be combined with any other one or more aspects unless it is explicitly stated that they cannot be combined. In particular, any feature deemed to be preferred or advantageous may be combined with one or more other features deemed to be preferred or advantageous.

The terms such as "first", "second" or the like used in the present disclosure are merely for the convenience of description, so as to distinguish different components with the same name, and do not indicate a sequential or primary-secondary relationship.

In the depiction of the present disclosure, it should be understood that the orientation or positional relationships indicated by the terms "upper", "lower", "inner" or "outer" are defined based on the front housing, the rear housing, the plug, etc.. These terms are only for facilitating the description of the present disclosure, and do not indicate or imply that the referred device must have a specific orientation, or be constructed and operated in a specific orientation; therefore, such terms shall not be construed as a limitation on the protection scope of the present disclosure.

In the research process, the inventors have found that, due to fastening of the terminal connector and the housing via screws, the existing vehicle-mounted cameras have long assembling time, high material costs and extensive space occupation in vehicle body, thus affecting the arrangement and installation of components related to the vehicle body.

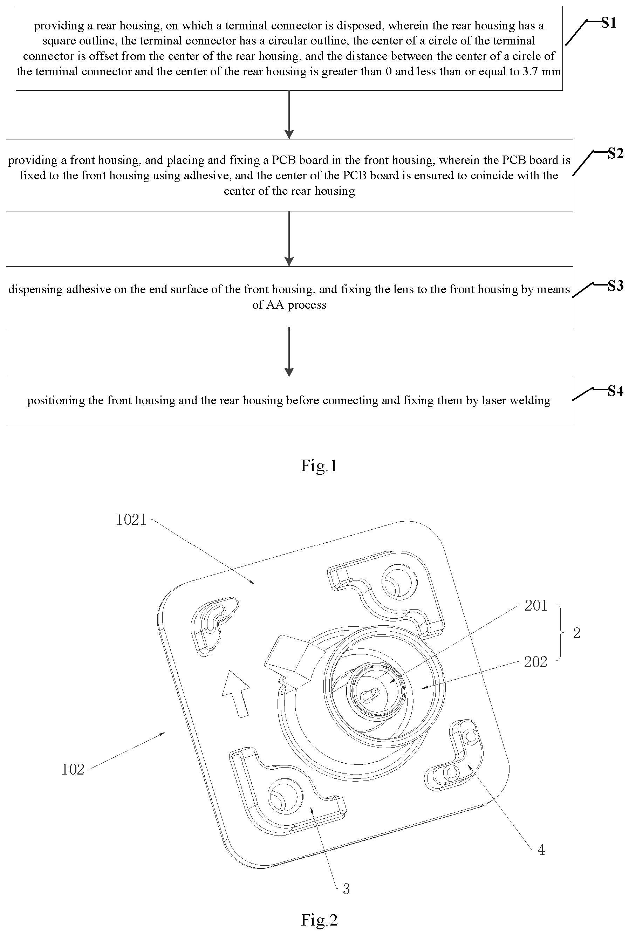

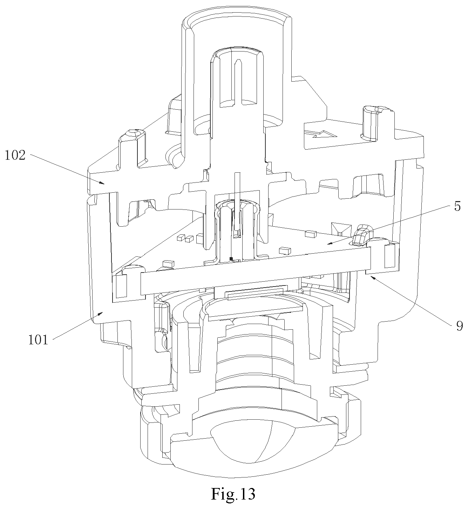

In order to solve the above-mentioned problems, in some embodiments, as shown in FIGS. 1 to 13, the present disclosure provides a vehicle-mounted camera, including:
a housing including a front housing 101 and a rear housing 102, wherein the front housing 101 and the rear housing 102 are fixedly connected;
a lens 7 connected to an end of the front housing 101 away from the rear housing 102;
a PCB board 5 disposed inside the front housing 101; and
a terminal connector 2 disposed on an end of the rear housing 102 away from the front housing 101, wherein the terminal connector 2 has one end connected to the PCB board 5, and has the other end extend out of the rear housing 102; and the terminal connector 2 includes a plug core 201 and a plug 202, with the plug 202 and the rear housing 102 being integrally formed by injection molding, and the plug core 201 being inserted into the plug 202. In this embodiment, the plug 202 and the rear housing 102 of the vehicle-mounted camera are integrally formed by injection molding, which results in low cost, fewer parts, simplified structure, reduced assembling time and high assembling efficiency, and can save the structural space required for screw fastening, and reduce volume of the camera (for example, the camera can be reduced to 18 * 18 mm in a length and a width direction). The integrally formed structure is stable, thus capable of improving the accuracy and stability of the connection between the plug core 201 and the PCB board 5, and extending the service life of the vehicle-mounted camera.

Split-type rear covers in the related art have high costs, long assembling time, and low assembling efficiency due to the addition of parts such as terminal bases, screws, etc. Moreover, screw fastening may increase the dimensions of the vehicle-mounted camera in the length and width directions. Additionally, in the split-type rear cover structures, if the screws are loosened under vibration during travelling of the vehicle, tangential stress tends to occur between the core of the terminal connector and the circuit board, thus affecting the signal transmission of the vehicle-mounted camera.

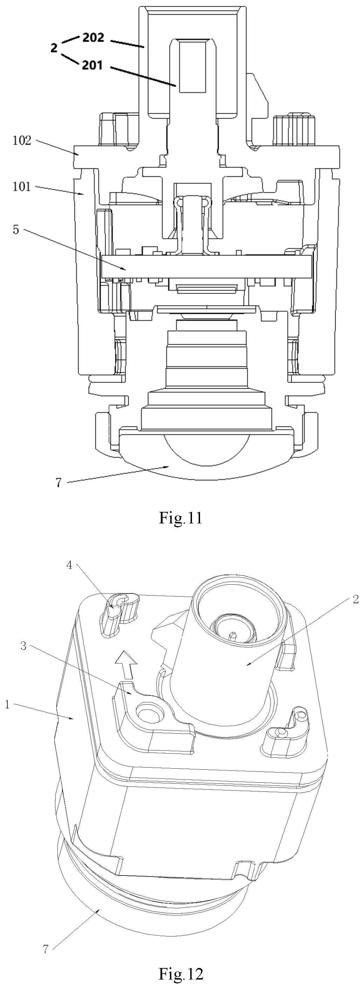

Referring to FIGS. 11 and 12, in some embodiments, the miniaturized vehicle-mounted camera includes a housing 1, a lens 7, a PCB board 5, and a terminal connector 2. The housing 1 includes a front housing 101 and a rear housing 102. The PCB board 5 is disposed inside the front housing 101. The terminal connector 2 is disposed on the rear housing 102, with one end of the terminal connector 2 connected to the PCB board 5 and the other end of the terminal connector 2 extending out of the rear housing 102. The lens 7 is arranged on the front housing 101.

In some embodiments, both the PCB board 5 and the terminal connector 2 have centers, wherein a center of the PCB board 5 coincides with a center of the housing 1 and a center of a circle of the lens 7; the outline of the terminal connector 2 is circular, i.e. a center of the terminal connector 2 is the center of a circle of the terminal connector 2.

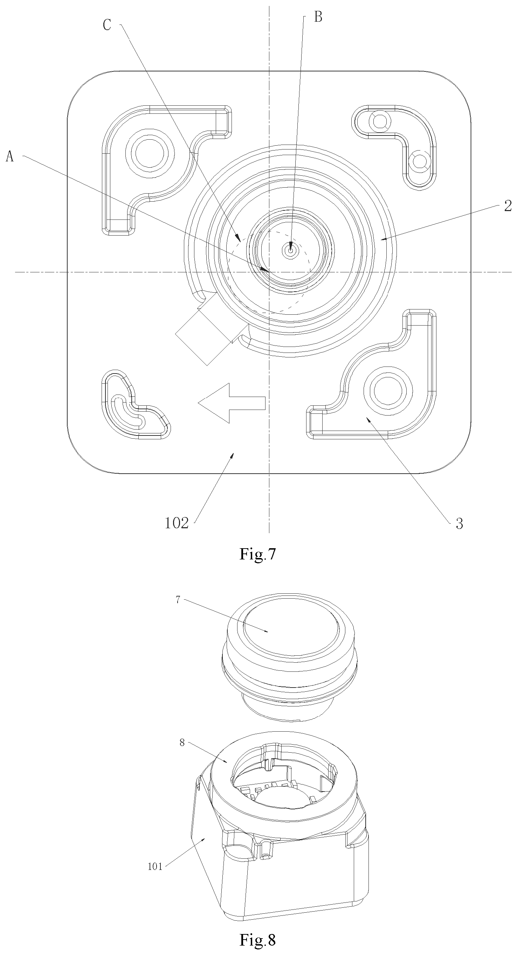

In some embodiments, the center of the terminal connector 2 is offset from the center of the PCB board 5 (the center of a circle of the lens 7). As shown in FIG. 7, the center of the PCB board 5 (the center of a circle of the lens 7) is shown as point A, and the center of a circle of the terminal connector 2 is shown as point B. The distance between the center of a circle of the terminal connector 2 and the center of the PCB board 5 (the center of a circle of the lens 7) is greater than 0 and less than or equal to 3.7 mm. Specifically, as shown in FIG. 7, taking the center of the PCB board 5 (i.e., the center of a circle of the lens 7, shown as point A in FIG. 7) as the center of a circle, a circle with a diameter of 3.7 mm is drawn (shown as circle C in FIG. 7). The center of a circle of the eccentrically-arranged terminal connector 2 (shown as point B in FIG. 7) is located within the range of the circle C with a diameter of 3.7 mm. By this arrangement, the space utilization of the PCB board 5 can be improved, such that some large elements can be placed closer to the center of the PCB board 5, thereby capable of reducing the area of the PCB board 5 and further reducing the overall volume of the vehicle-mounted camera. This not only leads to reduced material costs and space occupation in the vehicle body, but also facilitates the arrangement and installation of components related to the vehicle body.

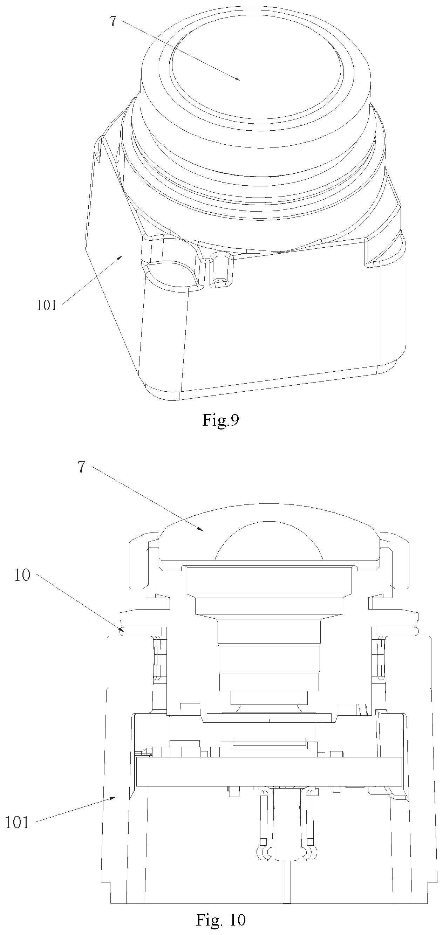

In some embodiments, the lens 7 is bonded to the front housing 101 using adhesive. As shown in FIG. 10, an adhesive layer 10 is provided between the lens 7 and the front housing 101. As the lens 7 and the housing 1 are bonded with adhesive, there is no need to provide screws on the lens 7 to connect with the housing 1, thereby reducing the volume of the camera. In some implementations, the lens 7 and the housing 1 may also be integrally formed, which can also eliminate the need to provide screws on the lens 7 for connection with the housing 1 to thereby reduce the volume of the camera and improve its stability.

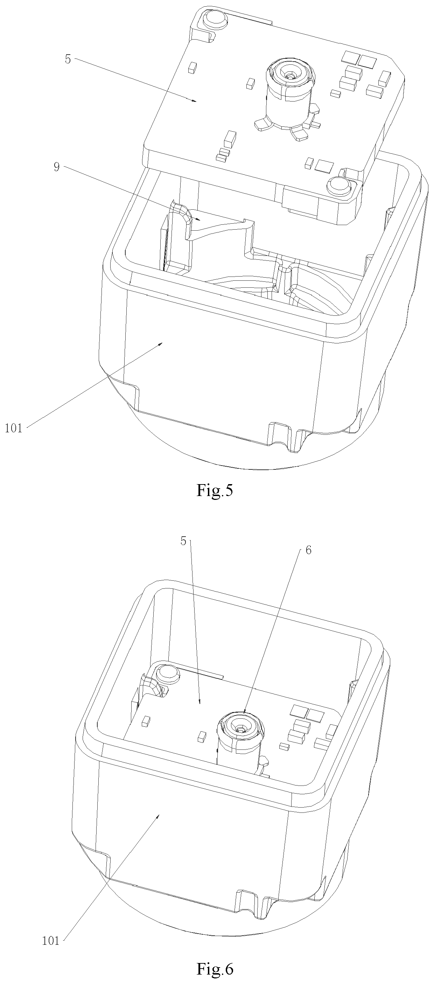

In some embodiments, as shown in FIGS. 5 and 6, the PCB board 5 is fixed to the housing 1 by dispensing adhesive (e.g., gluing). Specifically, a protrusion 9 is provided inside the front housing 101, adhesive is dispensed onto the protrusion 9 inside the front housing 101, and then the PCB board 5 is placed on top to be adhered. With this arrangement, there is no need to fix the PCB board 5 with screws, thereby reducing the overall volume of the camera and improving the stability of the PCB board 5.

In some embodiments, as shown in FIGS. 5 and 6, an interface 6 for connection with the terminal connector 2 is provided on the PCB board 5. After the front housing 101 and the rear housing 102 have been assembled, the terminal connector 2 is connected to the PCB board 5 via the interface 6. At this time, the distance between the center of a circle of the terminal connector 2 and the center of the PCB board 5 is greater than 0 and less than or equal to 3.7 mm. At present, the terminal connector of the commercially available vehicle-mounted cameras is typically positioned at the exact center of the PCB board 5, resulting in low space utilization of the PCB board 5. Due to arrangement of the terminal connector 2 at the exact center of the PCB board 5, some large elements can only be arranged around the terminal connector 2, and thus require a large PCB board 5 for installation. This leads to a large overall volume of the vehicle-mounted camera, high material costs and large space occupation in the vehicle body, thus affecting the arrangement and installation of components related to the vehicle body. In the present disclosure, by eccentrically arranging the terminal connector 2 relative to the PCB board 5, the space utilization of the PCB board 5 can be improved, such that some large elements can be placed closer to the center of the PCB board 5, thereby capable of reducing the area of the PCB board 5 and further reducing the overall volume of the vehicle-mounted camera. This not only leads to reduced material costs and space occupation in the vehicle body, but also facilitates the arrangement and installation of components related to the vehicle body.

In some embodiments, as shown in FIG. 12, the camera is provided with two screw posts 3 and two support posts 4 on the rear housing 102. The screw posts 3 are used for mounting with an external mounting bracket (or a vehicle body component), while the support posts 4 are used to support the mounting bracket (or the vehicle body component). Both the screw posts 3 and the support posts 4 are integrally formed with the rear housing 102 by injection molding.

In some alternative embodiments, the camera is provided with two connection posts (not shown in the figure) on the rear housing. The connection posts are used for hot-melt and fixed connection with the mounting bracket (or the vehicle body component). Specifically, in this embodiment, the rear housing of the camera is provided with no screw posts; instead, two connection posts are provided. By providing connection posts for hot-melt and fixed connection with the mounting bracket (or the vehicle body component), the mounting bracket (or the vehicle body component) can be connected with no need for multiple screws, thereby reducing the volume of the camera.

In some embodiments, clasps (not shown in the figure) may be provided on side walls of the housing. The housing is fixedly connected to the mounting bracket (or the vehicle body component) via the clasps. This means also eliminates the need for multiple screws to connect the mounting bracket (or the vehicle body component), thereby reducing the volume of the camera.

In some embodiments, the front housing 101 and the rear housing 102 of the present disclosure are connected together by means of laser welding, thus eliminating the need for screws to fasten the front and rear housings together, accordingly reducing the volume of the camera.

In some alternative embodiments, the front housing 101 and the rear housing 102 are allowed to undergo relative displacement before welding, ensuring that the plug core 201 is connected to the interface 6 of the PCB board 5 in a completely stress-free state.

In some embodiments, the distance between the center of the terminal connector and the center of the PCB board is 2.7 mm. This configuration not only allows the center of the terminal connector to be offset from the center of the PCB board, but also reserves a certain gap between the terminal connector 2 and the screw posts 3 such that a wiring harness connector in connection with the terminal connector 2 can be properly inserted into the rear housing 102 of the camera. In specific embodiments, when the distance between the center of the terminal connector 2 and the center of the PCB board 5 exceeds 3.7 mm, the gap between the terminal connector 2 and the screw posts 3 will be too small, resulting in that the wiring harness connector may interfere with the screw posts 3 on the rear housing 102 to lead to failed connection with the terminal connector 2. Additionally, due to edge size requirements of the laser welding process, a certain dimension required for laser welding must be reserved between the screw posts 3 and the edge of the rear housing 102. Moreover, both the terminal connector 2 and the screw posts 3 need to meet the relevant specified dimensions, thus also limiting the gap between the terminal connector 2 and the screw posts 3.

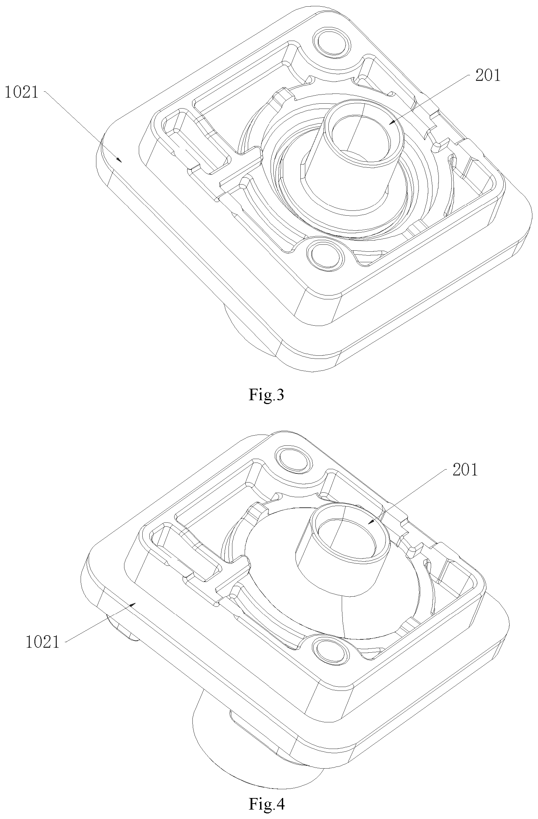

In some embodiments, as shown in FIGS. 3 and 4, the plug core 201 is fixed to the rear housing 102 by dispensing adhesive in a circumferential direction on the inner side of the rear housing 102.

In this embodiment, by fixing the plug core 201 to the rear housing 102 via dispensing adhesive in a circumferential direction, the rear housing 102 can be sealed from the inside, thereby enhancing the sealing performance of the vehicle-mounted camera. The split-type rear covers in related art obviously cannot achieve such adhesive-dispensing fixation as described in this embodiment as the terminal connector is detachable relative to the rear housing.

In specific embodiments, with the arrangement in the above embodiments, the present disclosure can produce a vehicle-mounted camera with a small volume. When the distance between the center of the terminal connector 2 and the center of the PCB board 5 is set to 2.7 mm, the dimension of the camera can be made to a length of 18 mm, a width of 18 mm and a height of 30.8 mm. Compared with current vehicle-mounted cameras (typically with a length and a width both greater than 23 mm and a height greater than 33 mm), the volume is significantly reduced.

On the other hand, the present disclosure provides a processing method for the vehicle-mounted camera based on the above embodiments, including:
processing a rear housing 102 provided with a terminal connector 2;
providing a front housing 101 and fixedly connecting a PCB board 5 to the inside of the front housing 101;
fixedly connecting a lens 7 to an end of the front housing 101 away from the rear housing 102;
connecting an end of the terminal connector 2 to the PCB board 5;
fixedly connecting the rear housing 102 to the front housing 101.

In this embodiment, the processing method for vehicle-mounted cameras, by integrally forming the plug head 202 and the rear housing 102 via injection molding, reduces costs, requires fewer parts, reduces assembling time, improves assembling efficiency, and can save the structural space for screw fastening and reduce volume of the camera (for example, reducing the length and width dimension to 18 * 18 mm), accordingly achieving the production of miniaturized vehicle-mounted cameras.

Referring to FIG. 1, an embodiment of the present disclosure discloses a processing method for miniaturized vehicle-mounted cameras, including the following steps:
S1: providing a rear housing, on which a terminal connector is disposed, wherein the rear housing has a square outline, the terminal connector has a circular outline, the center of a circle of the terminal connector is offset from the center of the rear housing, and the distance between the center of a circle of the terminal connector and the center of the rear housing is greater than 0 and less than or equal to 3.7 mm;
In a specific embodiment, referring to FIG. 2, the terminal connector 2 includes a plug core 201 and a plug 202. The rear housing 102 includes a rear housing body portion 1021 integrally formed with the plug 202 by injection molding. The plug core 201 is inserted into the plug 202 to form the terminal connector 2.

Referring to FIGS. 3 and 4, in a specific embodiment, in said S1, the manufacturing steps of the rear housing include:
1. providing a plug core 201;
2. placing the plug core 201 into an injection mold for injection-molding of the rear housing, such that the rear housing body portion 1021 after injection molding wraps around the plug core 201, wherein the portion of the rear housing body portion 1021 that wraps around the plug core 201 forms the plug 202; the plug 202 and the plug core 201 collectively form the terminal connector 2; and the center of a circle of the terminal connector 2 is offset from the center of the rear housing, and the distance between the center of a circle of the terminal connector 2 and the center of the rear housing is greater than 0 and less than or equal to 3.7 mm;
3. subsequently, fixing the plug core 201 to the rear housing 102 by dispensing adhesive.

In some alternative embodiments, in said S1, the manufacturing steps of the rear housing include:
1. injection molding the rear housing using an injection mold to form a rear housing body portion 1021, where the rear housing body portion 1021 includes a plug 202, wherein the outline of the plug 202 is circular, the center of a circle of the plug 202 is offset from the center of the rear housing, and the distance between the center of a circle of the plug 202 and the center of the rear housing is greater than 0 and less than or equal to 3.7 mm;
2. inserting the plug core 201 into the plug 202; specifically, the assembly may be performed manually or the plug core 201 may be pressed into the plug 202 by means of a jig;
3. fixing the plug core 201 to the rear housing via dispensing adhesive.

Referring to FIG. 2, in a specific embodiment, two screw posts 3 and two support posts 4 are disposed on the rear housing, wherein the screw posts 3 are used for mounting with an external mounting bracket (or a vehicle body component), while the support posts 4 are used to support the mounting bracket (or the vehicle body component), and both the screw posts 3 and the support posts 4 are integrally formed with the rear housing body portion 1021 during injection molding.

In an alternative embodiment, in the manufacturing steps of the rear housing, hot-melt connection posts are integrally formed on the rear housing by means of injection molding, wherein the connection posts are used for hot-melt fixed connection with the mounting bracket (or the vehicle body component). Specifically, the rear housing of the camera in this embodiment is provided with no screw posts; instead, two connection posts are provided. By providing connection posts for hot-melt fixed connection with the mounting bracket (or the vehicle body component), the mounting bracket (or the vehicle body component) can be connected with no need for multiple screws, thereby reducing the volume of the camera.

S2: providing a front housing, and placing and fixing a PCB board in the housing while ensuring that the center of the PCB board is coincident with the center of the rear housing.

Referring to FIGS. 5 and 6, in a specific embodiment, a protrusion 9 is provided inside the front housing 101, adhesive is dispensed onto the protrusion 9 inside the front housing 101, and then the PCB board 5 is placed on top to be fixed by adhesive. The PCB board 5 of the current camera is generally fixed to the housing 1 by screws, which results in a large volume occupation. In the present disclosure, by subjecting the PCB board 5 to adhesive-dispensing fixation with the steps of disposing a protrusion 9 inside the front housing 101, dispensing adhesive onto the protrusion 9 inside the front housing 101 and then placing the PCB board 5 thereon, the PCB board 5 does not need to be fixed with screws, thereby reducing the overall volume of the camera.

In some embodiments, as shown in FIG. 7, the center of the terminal connector 2 is offset from the center of the rear housing 102 (the center of the PCB board 5).The center of the rear housing 102 (the center of the PCB board 5) is indicated by point A in FIG. 7, the center of a circle of the terminal connector 2 is indicated by point B in FIG. 7, and the distance between the center of a circle of the terminal connector 2 and the center of the rear housing 102 (the center of the PCB board 5) is greater than 0 and less than or equal to 3.7 mm. Specifically, as shown in FIG. 7, taking the center of the rear housing 102 (i.e., the center of the PCB board 5, indicated by point A in FIG. 7) as the center of a circle, a circle with a diameter of 3.7 mm is drawn (shown as circle C in FIG. 7). The center of a circle of the eccentrically-arranged terminal connector 2 (shown as point B in FIG. 7) is located within the range of the circle C with a diameter of 3.7 mm. By this arrangement, the space utilization of the rear housing can be improved, such that some large elements can be placed closer to the center of the rear housing, thereby capable of reducing the area of the rear housing and further reducing the overall volume of the vehicle-mounted camera. This not only leads to reduced material costs and space occupation in the vehicle body, but also facilitates the arrangement and installation of components related to the vehicle body.

S3: dispensing adhesive on the end surface of the front housing, and fixing the lens to the front housing by means of AA process.

In a specific embodiment, as shown in FIGS. 8 to 10, adhesive is dispensed on the end surface 8 of the front housing 101, and the lens 7 is fixed to the front housing 101 by means of AA process, forming an adhesive layer 10 between the lens 7 and the front housing 101.

In some embodiments, the lens and the housing of the current camera are typically connected by threaded engagement, which results in a large volume occupation. However, in the present disclosure, the lens and the housing are fixed by bonding; as shown in FIGS. 10 and 11, an adhesive layer is disposed between the lens and the front housing. Due to adhesive bonding between the lens and the housing, there is no need to provide screws on the lens for connection with the housing, thus reducing the volume of the camera. In some embodiments, the lens and the housing may also be integrally formed, which can also eliminate the need to provide screws on the lens for connection with the housing, thereby also capable of reducing the volume of the camera.

S4: connecting and fixing the front housing and the rear housing by means of laser welding process.

In a specific embodiment, the front and rear housings of the current camera are usually fastened by screws, which results in a large volume occupation. As shown in FIG. 11, the front housing 101 and the rear housing 102 of the present disclosure are connected together by laser welding, which obviates the need for fastening the front and rear housings with screws, thus reducing the volume of the camera.

In a specific embodiment, the distance between the center of the terminal connector and the center of the PCB board is 2.7 mm. This configuration not only allows the center of the terminal connector to be offset from the center of the PCB board, but also reserves a certain gap between the terminal connector and the screw posts such that a wiring harness connector in connection with the terminal connector can be properly inserted into the rear housing of the camera. In specific embodiments, when the distance between the center of the terminal connector and the center of the PCB board exceeds 3.7 mm, the gap between the terminal connector and the screw posts will be too small, resulting in that the wiring harness connector may interfere with the screw posts on the rear housing to lead to failed connection with the terminal connector. Additionally, due to edge size requirements of the laser welding process, a certain dimension required for laser welding must be reserved between the screw posts and the edge of the rear housing. Moreover, both the terminal connector and the screw posts need to meet the relevant specified dimensions, thus also limiting the gap between the terminal connector and the screw posts.

In specific embodiments, the miniaturized vehicle-mounted camera formed using the method of the present disclosure has a length of 18 mm, a width of 18 mm and a height of 30.8 mm. Compared with the current vehicle-mounted cameras (typically with a length and a width both greater than 23 mm and a height greater than 33 mm), its volume is significantly reduced.

In conclusions, in the vehicle-mounted camera and its processing method according to the present disclosure, by eccentrically arranging the terminal connector relative to the PCB board, the space utilization of the PCB board can be improved, such that some large elements can be placed closer to the center of the PCB board, thereby capable of reducing the area of the PCB board and further reducing the overall volume of the vehicle-mounted camera, which not only leads to reduced material costs and space occupation in the vehicle body, but also facilitates the arrangement and installation of components related to the vehicle body; furthermore, the PCB board is fixed to the housing using adhesive, thus eliminating the need for screws to secure the PCB board and thereby reducing the overall volume of the camera; additionally, the lens is bonded to the housing with adhesive, thus obviating the need to provide threads on the lens for connection with the housing and further reducing the volume of the camera; moreover, the front housing and the rear housing are connected by laser welding, and thus eliminates the need for screws to fasten them together, accordingly reducing the volume of the camera, improving the overall spatial structure utilization of the camera, reducing material costs and space occupation in the vehicle body, and facilitating layout and installation of the vehicle body.

In some embodiments, the present disclosure proposes a processing method for a miniaturized vehicle-mounted camera, including the following steps:
S1: providing a rear housing, on which a terminal connector is disposed, wherein the rear housing has a square outline, the terminal connector has a circular outline, the center of a circle of the terminal connector is offset from the center of the rear housing, and the distance between the center of a circle of the terminal connector and the center of the rear housing is greater than 0 and less than or equal to 3.7 mm;
S2: providing a front housing, and placing and fixing a PCB board in the front housing, wherein the PCB board is fixed to the front housing using adhesive, and the center of the PCB board is ensured to coincide with the center of the rear housing;
S3: dispensing adhesive on the end surface of the front housing, and fixing the lens to the front housing by means of AA process.
S4: positioning the front housing and the rear housing before connecting and fixing them by laser welding.

By adopting the above technical solution, as the distance between the center of the terminal connector and the center of the rear housing is greater than 0 and less than or equal to 3.7 mm, the center of the terminal connector is made offset from the center of the PCB board, thereby improving the space utilization of the PCB board and reducing the overall volume of the vehicle-mounted camera.

Optionally, the terminal connector includes a plug core and a plug, and the rear housing includes a rear housing body portion integrally formed with the plug by injection molding.

Optionally, in said S1, the manufacturing steps of the rear housing include:
providing a plug core;
placing the plug core into an injection mold for injection-molding of the rear housing, such that the rear housing body portion after injection molding wraps around the plug core, wherein the portion of the rear housing body portion that wraps around the plug core forms the plug;
fixing the plug core to the rear housing body portion by dispensing adhesive.

Optionally, in said S1, the manufacturing steps of the rear housing include:
injection molding the rear housing using an injection mold to form a rear housing main body portion, wherein the rear housing main body portion includes a plug;
inserting a plug core into the plug;
fixing the plug core to the rear housing body portion by dispensing adhesive.

Optionally, the rear housing is provided with fusion-welding posts for fusion-welding to vehicle body mounting components, and the fusion-welding posts are integrally formed with the rear housing by injection molding.

Optionally, the distance between the center of the terminal connector and the center of the rear housing is 2.7 mm.

Optionally, the rear housing has a length of 18 mm, and a width of 18 mm.

In some embodiments, the present disclosure also proposes a miniaturized vehicle-mounted camera, including:
a housing including a front housing and a rear housing, which are fixedly connected by means of laser welding;
a terminal connector disposed on the rear housing, wherein the rear housing has a square outline, the terminal connector has a circular outline, the center of a circle of the terminal connector is offset from the center of the rear housing, and the distance between the center of a circle of the terminal connector and the center of the rear housing is greater than 0 and less than or equal to 3.7 mm;
a PCB board disposed inside the front housing, fixed to the front housing using adhesive, and connected to the terminal connector, wherein the center of the PCB board coincides with the center of the rear housing;
a lens disposed on the front housing and fixed to the front housing using adhesive.

Optionally, the distance between the center of the terminal connector and the center of the rear housing is 2.7 mm.

Optionally, the miniaturized vehicle-mounted camera has a length of 18 mm, a width of 18 mm and a height of 30.8 mm.

Embodiments of the present disclosure have been described in detail above with reference to the accompanying drawings, but the present disclosure is not limited to the above embodiments. Within the scope of knowledge of those skilled in the art, various modifications can be made without departing from the spirit of the present disclosure. Furthermore, embodiments of the present disclosure and features in the embodiments can be combined with each other without conflict.

## Claims

1. A vehicle-mounted camera, comprising:
a housing comprising a front housing (101) and a rear housing (102) fixedly connected together;
a lens (7) connected to an end of the front housing (101) away from the rear housing (102);
a PCB board (5) disposed inside the front housing (101); and
a terminal connector (2) disposed on an end of the rear housing (102) away from the front housing (101), wherein the terminal connector (2) has one end connected to the PCB board (5), and has the other end extend out of the rear housing (102); and the terminal connector (2) includes a plug core (201) and a plug (202), with the plug (202) being integrally formed with the rear housing (102) by injection molding, and the plug core (201) being inserted into the plug (202).

2. The vehicle-mounted camera according to claim 1, wherein the front housing (101) and the rear housing (102) are fixed by laser welding.

3. The vehicle-mounted camera according to claim 1 or 2, wherein an axis of the terminal connector (2) is offset from a center of the rear housing (102).

4. The vehicle-mounted camera according to claim 3, wherein a distance between the axis of the terminal connector (2) and the center of the rear housing (102) is greater than 0 and less than or equal to 3.7 mm.

5. The vehicle-mounted camera according to claim 4, wherein the distance between the axis of the terminal connector (2) and the center of the rear housing (102) is greater than or equal to 2.7mm and less than or equal to 3.7mm.

6. The vehicle-mounted camera according to any one of claims 1 to 5, wherein a protrusion (9) is provided inside the front housing (101), and the PCB board (5) is bonded to the protrusion (9).

7. The vehicle-mounted camera according to any one of claims 1 to 6, wherein the PCB board (5) is provided with an interface (6) which is disposed within the front housing (101), and the plug core (201) is connected with the PCB board (5) through the interface (6).

8. The vehicle-mounted camera according to any one of claims 1 to 7, wherein a center of the PCB board (5) coincides with the center of the rear housing (102).

9. The vehicle-mounted camera according to any one of claims 1 to 8, wherein the plug core (201) is fixed to the rear housing (102) by dispensing adhesive in a circumferential direction on an inner side of the rear housing (102).

10. The vehicle-mounted camera according to any one of claims 1 to 9, further comprising:
a connection post disposed on a side of the rear housing (102) away from the front housing (101) and configured to be fixedly connected with a mounting bracket or a vehicle body component, wherein the connection post is integrally formed with the rear housing (102) by injection molding, and is disposed at intervals from the plug (202).

11. The vehicle-mounted camera according to claim 10, wherein the distance between the axis of the terminal connector (2) and the center of the rear housing (102) is equal to 2.7 mm.

12. The vehicle-mounted camera according to claim 10 or 11, wherein the connection post comprises a screw post (3) or a hot-melt post, in which the screw post (3) is configured to be in threaded connection with the mounting bracket or the vehicle body component, and the hot-melt post is configured to be in hot-melt connection with the mounting bracket or the vehicle body component.

13. The vehicle-mounted camera according to any one of claims 1 to 12, further comprising:
a clasp disposed on a wall of the front housing (101) or the rear housing (102) and configured to be fixedly connected with the mounting bracket or the vehicle body component.

14. The vehicle-mounted camera according to any one of claims 1 to 13, wherein the lens (7) and the front housing (101) are bonded by adhesive, or the lens (7) and the front housing (101) are integrally formed.

15. The vehicle-mounted camera according to any one of claims 1 to 14, wherein the distance between the axis of the terminal connector (2) and the center of the rear housing (102) is 2.7mm, and the vehicle-mounted camera has a length of 18mm, a width of 18mm and a height of 30.8mm.

16. The vehicle-mounted camera according to any one of claims 1 to 15, wherein an outline of the rear housing (102) is square, and an outline of the terminal connector (2) is circular.

17. A processing method for the vehicle-mounted camera according to any one of claims 1 to 16, comprising:
processing the rear housing (102) provided with the terminal connector (2);
providing the front housing (101), and fixedly connecting the PCB board (5) to an inside of the front housing (101);
fixedly connecting the lens (7) to an end of the front housing (101) away from the rear housing (102);
connecting an end of the terminal connector (2) to the PCB board (5);
fixedly connecting the rear housing (102) to the front housing (101).

18. The processing method according to claim 17, wherein the rear housing (102) comprises a rear housing body portion (1021), and the step of processing the rear housing (102) provided with the terminal connector (2) comprises:
providing the plug core (201);
placing the plug core (201) into an injection mold for injection molding, such that the rear housing body portion (1021) formed after injection molding wraps around the plug core (201), and the rear housing body portion (1021) comprises the plug (202) wrapped around the plug core (201);
fixing the plug core (201) to the rear housing body portion (1021) by dispensing adhesive on the inner side of the rear housing (102).

19. The processing method according to claim 17, wherein the rear housing (102) comprises a rear housing body portion (1021), and the step of processing the rear housing (102) provided with the terminal connector (2) comprises:
performing injection molding with an injection mold to form the rear housing body portion (1021), wherein the rear housing body portion (1021) comprises the plug (202);
inserting the plug core (201) into the plug (202);
fixing the plug core (201) to the rear housing body portion (1021) by dispensing adhesive on the inner side of the rear housing (102).
